# EUROPEAN PATENT APPLICATION

(11) **EP 0 742 062 A2**
(43) Date of publication of application: **13.11.1996**
(21) Application number: 96830252.1
(22) Date of filing: 30.04.1996
(51) Int. Cl.: B23B 27/04

(54) **A tool with mechanically fixable bit**

(30) Priority: 08.05.1995 IT MO950073
(71) Applicant: Ferigo, Renzo, 41100 Modena (MO) (IT)
(72) Inventor: Ferigo, Renzo, 41100 Modena (MO) (IT)
(74) Representative: Lanzoni, Luciano

(57) **Abstract**

The tool with mechanically fixable bit comprises a stem (1) provided with a dovetail-shaped hollow seating (10) in which a dovetail-shaped part (20) of a metal bit (2) is coupled. The metal bit (2) is blocked in the hollow seating (10) by means of a locking organ (30) acting perpendicularly against an upper side (21) of the dovetail-shaped part (20) of the metal bit (2).

## Description

The field of application of the invention is very wide and comprises lathing in general and in particular parting, shearing and thread cutting. The prior art comprises tools with mechanically-fixable hard metal bits. For small or specially-shaped bits, mainly used for precision machining, known mechanical fixing systems exhibit various drawbacks. In some cases, fixing, carried out by means of bolts or plates tightened by screws, is not able to guarantee high rigidity, nor is able to prevent onset of unwanted vibrations during machining. In some cases, the bit is fixed directly on the stem by means of screws housed in special holes situated on the bit itself. This type of realisation, though achieving a good fixture, requires expensive preparatory work on the bit and also means that the bit has to be of sufficient size to withstand all the various through-holes for the screws.

The present invention, as it is characterised in the claims that follow, obviates the above-mentioned drawbacks in the prior art by providing a tool with a mechanically-fixable bit which is simple and functional, in which the bit is coupled on a stem by means of a dove-tail coupling and is fixed by means of a locking organ that acts on a side of a shaped side of said dove-tail of the bit.

An advantage of the invention is constituted by its constructional simplicity.

Further characteristics and advantages of the present invention will better emerge from the detailed description that follows, of an embodiment of the invention, illustrated in the form of a non-limiting example in the accompanying drawings, in which:

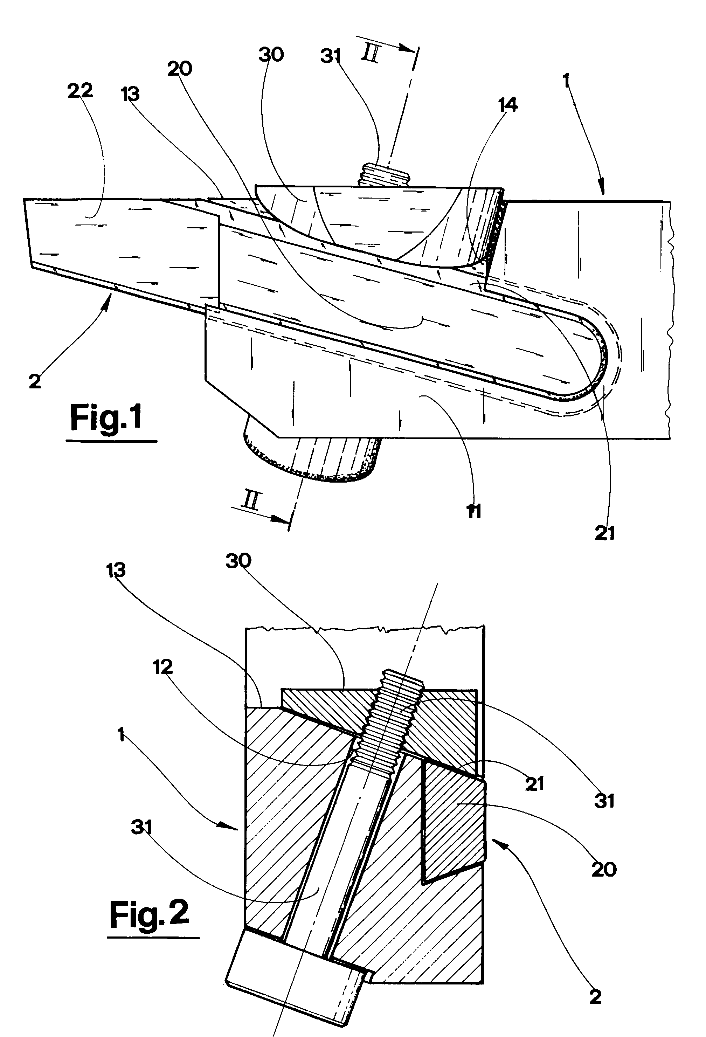

figure 1 is a partial lateral view in vertical elevation;
figure 2 is a schematic section executed along line II-II of figure 1;

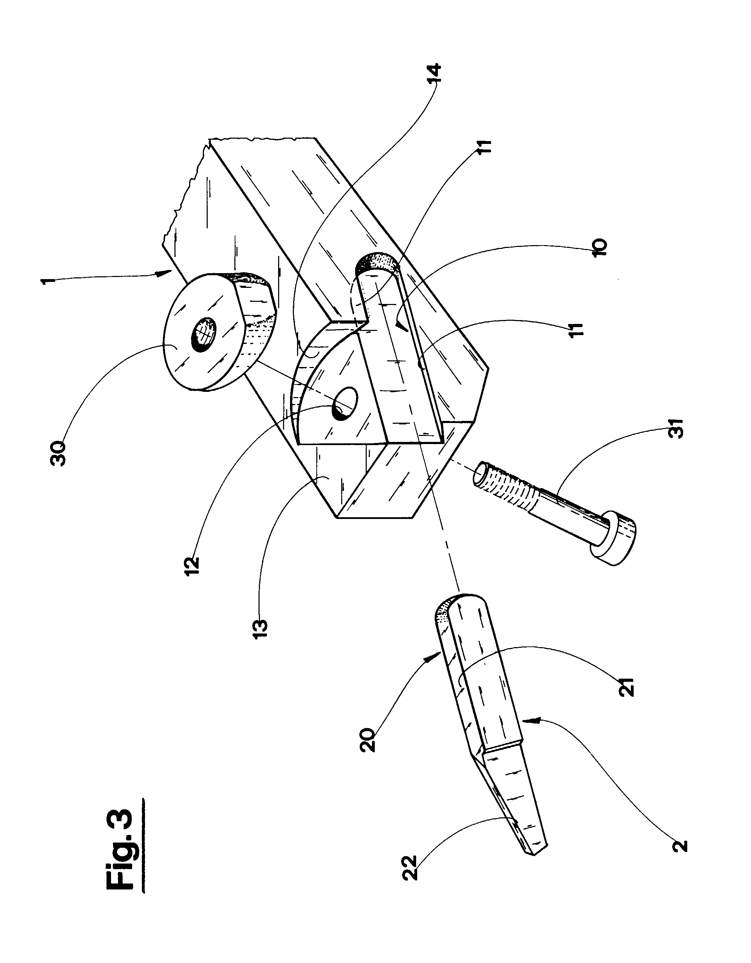

figure 3 is a schematic exploded perspective view.

With reference to the figures, 1 denotes a straight stem with a slide-fitting predisposition, which at a front end and fashioned in a side thereof exhibits a hollow dove-tail seating 10.

Considering the stem arranged with an axis thereof diposed horizontally, the hollow seating 10 is inclined downwards, looking from an end of the stem, at an angle of about 15 degrees with respect to the axis or to the horizontal plane containing the axis of the stem.

The sides 11 of the hollow seating 10 preferably exhibit an inclination of about 20 degrees. A part of a superior (that is, a part closest to an upper face 13 of the stem 1) of the sides 11 of the hollow seating 10 is in fact missing, since a portion of the stem 1 has been removed to give rise to a cavity 14. A through-hole 12 has been bored in the cavity 14, which through-hole 12 has an axis lying in a perpendicular plane to the axis of the stem 1 and to the upper side of the hollow seating 10.

A hard metal bit 2 exhibits a dovetail-shaped part 20 which is predisposed to couple slidingly and exactly with the hollow seating 10, also dovetailed. The dovetail-shaped part 20 is distinct from the cutting part 22 of the bit.

The coupling between the dovetail-shaped part 20 of the metal bit 2 and the hollow seating 10 of the stem 1 is precise.

Blocking of the dovetail-shaped part 20 in the metal bit 2 of the stem 1 is done using means for blocking which comprise a locking organ 30 acting perpendicularly against the surface of an upper side 21 of the dovetailed part of the metal bit 2. The locking organ 30 is brought to bear perpendicularly against the upper side 21 of the dovetail-shaped part 20 by means of a screw connection in which a screw 31 is housed in the through-hole 12 made in the stem 1 and which opposite end to a head thereof is screwed into a threaded hole machined in the locking organ 30. The blocking and releasing of the metal bit 2 in the stem 1 is thus very simple and rapid to carry out.

Further, the coupling and the blocking realized between the metal bit 2 and the stem 1 render the system extremely rigid and particularly resistant to the effect of vibrations during machining operations. This is partly due to the fact that the end of the dovetail-shaped part 20 of the metal bit 2 is completely housed internally of the enclosed end of the hollow seating 10. Thanks to this arrangement the sides 11 of the hollow seating 10 are very effectively able to contrast the forces transmitted thereto by the dovetail-shaped part 20 of the metal bit 2 during machining operations.

## Claims

1. A tool with mechanically fixable bit, comprising a tool-bearing stem (1), a metal bit (2), means for blocking said metal bit (2) on said stem (1),
characterized in that:
said stem (1) comprises a dovetail-shaped hollow seating (10) arranged at a predetermined inclination with respect to an axis of said stem (1);
said metal bit (2) exhibits a dovetail-shaped part (20), provided with inclined sides (21) and predisposed to couple precisely and slidingly with the hollow seating (10);
said means for blocking comprising at least one locking organ (30) acting perpendicularly against a surface of an upper side (21) of said dovetail-shaped part (20) of said metal bit (2).

2. A tool as in claim 1, characterized in that said hollow seating (10) is fashioned in a side of said stem (1) at a front end thereof and is inclined at an angle of about 15 degrees with respect to said axis of the stem (1).

3. A tool as in claim 1, characterized in that sides (11) of said hollow seating (10) and the sides (21) of the dovetail-shaped part (20) of the stem (1) exhibit an inclination of 20 degrees with respect to median longitudinal planes of said hollow seating (10) and said dovetail-shaped part (20).

4. A tool as in claim 1, characterized in that said locking organ (30) is compressed against and acts perpendicularly against an upper side of said sides (21) of said dovetail-shaped part (20) of said metal bit (2) by means of a screw coupling in which a screw (31), housed in a through hole (12) bored with axis perpendicular to said side (11) in said stem (1), has an end opposite to a head thereof screwed into a threaded hole afforded in said locking organ (30).
